Europäisches Patentamt

European Patent Office

Office européen des brevets

(11) Veröffentlichungsnummer: **0 076 968**
**B1**

# (12) EUROPÄISCHE PATENTSCHRIFT

(45) Veröffentlichungstag der Patentschrift:
10.07.85

(51) Int. Cl.⁴: **G 06 F 9/46**, G 06 F 3/12

(21) Anmeldenummer: 82108977.8

(22) Anmeldetag: 28.09.82

(54) Schaltungsanordnung zur schnellen Ausführung von Unterbrechungen nach Erkennen einer Unterbrechungsanforderung.

(30) Priorität: 30.09.81 DE 3138961

(43) Veröffentlichungstag der Anmeldung:
20.04.83 Patentblatt 83/16

(45) Bekanntmachung des Hinweises auf die Patenterteilung:
10.07.85 Patentblatt 85/28

(84) Benannte Vertragsstaaten:
FR GB IT NL SE

(56) Entgegenhaltungen:
US - A - 3 293 612
US - A - 3 373 408
US - A - 3 668 646

(73) Patentinhaber: Siemens Aktiengesellschaft, Berlin und München Wittelsbacherplatz 2, D-8000 München 2 (DE)

(72) Erfinder: Eckert, Alfred, Grünstrasse 32,
D-8000 München 70 (DE)
Erfinder: Hellmeir, Ernst, Passauer Strasse 25,
D-8000 München 70 (DE)
Erfinder: Hempen, Klaus, Saarlauterer Strasse 68,
D-8000 München 50 (DE)

## Beschreibung

Die Erfindung betrifft eine Schaltungsanordnung gemäß dem Oberbegriff des Patentanspruches 1.

·Prozessoren werden u. a. zur Steuerung von Schreib- und Druckwerken verwendet. Eine wesentliche Forderung, die an neuere Schreib- und Druckwerke gestellt wird, ist eine hohe Schreibgeschwindigkeit. Dadurch werden an den Prozessor erhebliche Ansteuerprobleme für die als Schreib- und Druckwerke eingesetzten Einrichtungen gestellt. Als Beispiel sei hier auf elektromechanische Wandler wie Matrixdruckköpfe, Schrittmotore u. ä. hingewiesen. Enthält das Schreibwerk z. B. einen Matrixdruckkopf, mit dem die Zeichen in einer Punktmatrix in Form eines Punktrasters abgedruckt werden, so beträgt bei einer Schreibgeschwindigkeit von 800 Zeichen pro Sekunde und einem Druckkonzept, nach dem ein Zeichen in einer Matrix mit 14 Druckspalten und 16 Punkten pro Druckspalte darstellbar ist, der zeitliche Abstand der Druckspalten nur etwa 90 µs. Um ein optisch gutes Schriftbild zu erhalten, wird gefordert, daß der Versatz der Matrixdruckpunkte zueinander in einer Druckspalte eines Zeichens auf dem Papier nicht größer als ±0,05 mm sein darf. In dieser Gesamttoleranz von maximal ±0,05 mm sind 3 Teiltoleranzen enthalten, die von der Mechanik, von dem Verstärker und von der Unterbrechungsausführung des Prozessors herrühren. Der auf diese Unterbrechungsausführung zurückzuführende Toleranzteil beträgt etwa 50% der Gesamttoleranz. Um den Versatz der Matrixdruckpunkte zueinander innerhalb einer Druckspalte bei einer zulässigen Gesamttoleranz von ±0,05 mm auf dem Papier nicht zu überschreiten, muß bei dem angegebenen Beispiel der Abdruck eines Matrixdruckpunktes innerhalb einer zeitlichen Toleranz von maximal 25 µs erfolgt sein. Das bedeutet, daß die Unterbrechungsausführung, d. h. der Datentransfer, nach Erkennen einer Unterbrechungsanforderung durch den Prozessor also in einer Zeitspanne von etwa 12 µs pro Druckspalte erfolgen muß. Innerhalb dieser Zeitspanne können jederzeit mehrere Unterbrechungsanforderungen auftreten. Diese können z. B. einen Motorimpuls, einen Impuls für die Ansteuerung des Druckkopfes oder eine Bewegung des Wagens, mit dem der Schreibkopf entlang dem Aufzeichnungsträger bewegt wird und auch Schnittstellenbedingungen betreffen.

Weiterhin müssen auch verschiedene Schriftarten, z. B. links- und rechtsgeneigte bidirektionale Schrift, Breitschrift, Flächendruck, Schmalschrift, Proportionalschrift und ähnl. mit hoher Schreibgeschwindigkeit möglich sein. Zur Realisierung all dieser Schriftarten ist es erforderlich, die Matrixdruckpunkte auch zwischen den durch das Druckkonzept vorgegebenen Druckspalten abzudrucken. Die Anforderungen an eine sehr schnelle Ausführung der Unterbrechung nach Erkennung der Unterbrechungsanforderung werden damit weiter erhöht. Beispielsweise werden zum Abdruck einer links- oder rechtsgeneigten bidirektionalen Schrift mit einem Matrixdruckkopf mit 14 Druckspalten pro Zeichen, 14 zusätzliche Zwischenspalten eingeschoben, wodurch sich die Zeitspanne für die Unterbrechungsausführung durch den Prozessor auf etwa 6 µs reduziert.

Bei herkömmlichen Prozessoren ist nach der Erkennung einer Unterbrechungsanforderung eine umfangreiche Rettungsroutine verschiedener Steuerparameter notwendig. Dadurch entsteht ein erheblicher Zeitaufwand zwischen Erkennung einer Unterbrechungsanforderung und Ausführung der Unterbrechung, der in Abhängigkeit von der Art der Unterbrechung im laufenden Programm zeitlich schwanken kann. Für den sog. Aussprung aus dem Hauptprogramm und den Rücksprung in das Hauptprogramm mit den üblichen Rettungs- und Rückladeroutinen relevanter Steuerparameter werden etwa 40 µs benötigt.

Herkömmliche Prozessoren sind deshalb aufgrund ihres Funktionsaufbaus nicht in der Lage, die erforderlichen Unterbrechungen innerhalb solcher geringen zeitlichen Abstände auszuführen, wie sie bei Schreibgeschwindigkeiten in der angegebenen Größenordnung auftreten. Das führt dazu, daß die Ansteuerung der einzelnen Aggregate des Schreibwerks, wie z. B. Matrixdruckköpfe, Schrittmotore mit verschiedener Phasenzahl, Gleichstrommotore mit Taktscheibe, parallele oder serielle Schnittstellen, also nicht zeitgerecht erfolgt. Eine zeitgerechte Ansteuerung bedeutet, daß die Unterbrechung durch den Prozessor in einer Zeitspanne von 6 µs nach der Unterbrechungsanforderung ausgeführt sein muß. Nur dann ist sichergestellt, daß ein optisch gutes Schriftbild erreicht wird.

Bisher ist eine schnelle Unterbrechungsausführung durch herkömmliche Prozessoren nur dann möglich, wenn sie parallel auf mehrere Prozessoren verteilt wird. Der damit verbundene Aufwand ist jedoch beträchtlich.

Aus der US-PS 3 373 408 ist eine Schaltungsanordnung bekannt, bei der über adressierbare Instruktionszeiger aufgrund von Unterbrechungsanforderungen oder Ereignissen im Prozessor zwischen verschiedenen Programmebenen umgeschaltet wird. Nach einer Unterbrechungsanforderung werden die Unterbrechungsroutine, das heißt der Datentransfer und weitere Programmschritte ausgeführt. Am Ende der Unterbrechungsroutine wird wieder auf die Programmebene, in der das Hauptprogramm abgearbeitet wird, zurückgeschaltet.

Aus den Druckschriften US-PS 3 668 646 und US-PS 3 293 612 ist ein Umlaufzähler, und aus der letzteren Druckschrift darüber hinaus noch ein Unterbrechungsmultiplexer bekannt.

Der Erfindung liegt die Aufgabe zugrunde, eine Schaltungsanordnung anzugeben, mit der für einen Prozessor die Möglichkeit geschaffen wird, den zu einer Unterbrechungsroutine gehörenden Datentransfer sofort nach Beendigung des gerade laufenden Maschinenzyklus auszuführen, und den Programmablauf für nur eine Instruktion zu unterbrechen.

Diese Aufgabe wird erfindungsgemäß durch die im kennzeichnenden Teil des Patentanspruches 1 angegebenen Maßnahmen gelöst.

Eine besonders vorteilhafte Schaltungsanordnung zur Durchführung des erfindungsgemäßen Verfahrens ist im Patentanspruch 2 angegeben. Damit wird ermöglicht, ein laufendes, aktuelles Programm für die Ausführung einer Unterbrechung für nur maximal 5 µs anzuhalten. Dies ist die Zeitspanne von der Erkennung der Unterbrechungsanforderung bis zum Ende des Datentransfers. Die einzelnen Einrichtungen eines Schreib- und Druckwerkes können nunmehr auch bei hohen Schreibgeschwindigkeiten zeitgerecht angesteuert werden, d. h. ein Datentransfer kann schnell und zeitgerecht ausgeführt werden.

Ein weiterer Vorteil besteht darin, daß das Einfügen von Instruktionen in den Programmablauf auch für andere Funktionen innerhalb des Prozessors benützt werden kann.

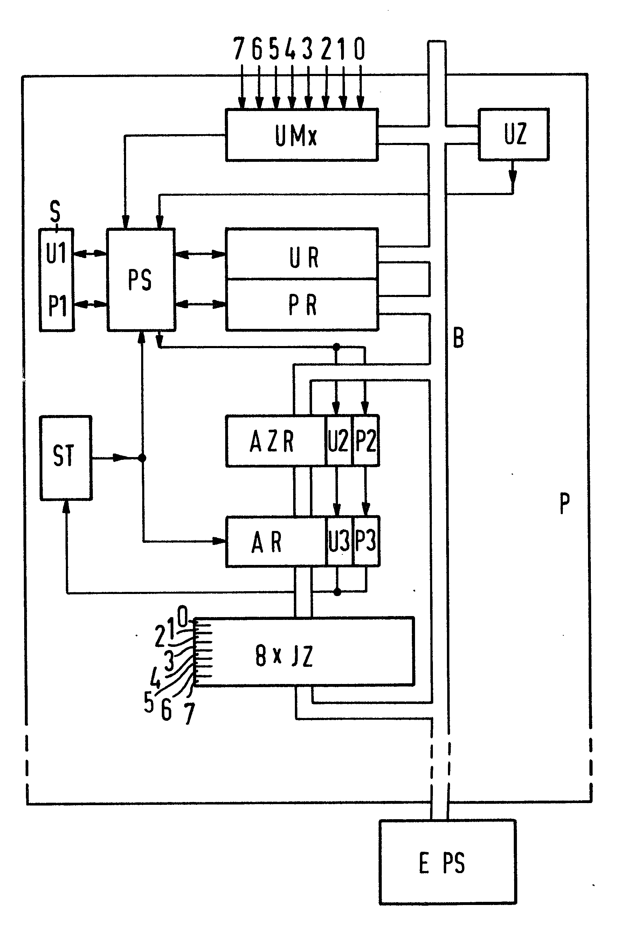

Die Erfindung wird im folgenden anhand eines in der Zeichnung dargestellten Ausführungsbeispieles näher beschrieben.

Die Zeichnung zeigt einen Prozessor P, von dem nur die zum Verständnis der Erfindung notwendigen Bauelemente dargestellt sind. Im einzelnen enthält der Prozessor P ein Steuerwerk ST und einen externen Programmspeicher EPS. Zur Durchführung der Erfindung sind ein Unterbrechungs-Multiplexer UMX, ein Umlaufzähler UZ, ein Unterbrechungsregister UR, ein Programmregister PR, ein Adreßzwischenregister AZR mit zwei Kippstufen U2 und P2, ein Adreßregister AR mit zwei Kippstufen U3 und P3, ein Programmspeicher PS, der das Steuerprogramm für die Schaltungsanordnung enthält, ein Statusregister S und Instruktionszeiger IZ vorgesehen. Das Statusregister S besteht aus zwei Kippstufen U1 und P1. Diese Schaltungsteile sind über einen Bus B und durch verschiedene Steuerleitungen verbunden.

Zunächst werden die Funktionen der einzelnen Schaltungsteile erläutert.

Der Umlaufzähler UZ wird vom Systemtakt des Prozessors P mit einer vorgegebenen Taktfrequenz angesteuert. Der Umlaufzähler UZ ist ein 3-Bitzähler, der zyklisch die Adressen 0 bis 7 bildet.

An dem Unterbrechungsmultiplexer UMX sind an acht Eingängen Leitungen für Unterbrechungsanforderungen angeschaltet.

Das Unterbrechungsregister UR und das Programmregister PR enthalten acht Ebenen, die nach fallenden Prioritäten von 0 bis 7 angeordnet sind.

Durch das im externen Programmspeicher EPS stehende Programm werden Bits, sog. P-Bits im Programmregister PR gesetzt und gelöscht.

Vom Umlaufzähler UZ werden die Eingänge des Unterbrechungsmultiplexers UMX zyklisch nach anliegenden Unterbrechungsanforderungen abgesucht. Liegt eine Unterbrechungsanforderung an einem der Eingänge an, so wird sie unter einer bestimmten, im Umlaufzähler UZ stehenden Adresse gefunden. In das Unterbrechungsregister UR wird nun ein Bit, ein sog. U-Bit in die Ebene geschrieben, die der Adresse entspricht.

Der Umlaufzähler UZ sucht auch zyklisch die Ebenen des Unterbrechungsregisters UR und des Programmregisters PR nach gesetzten U- bzw. P-Bits ab.

Wenn der Umlaufzähler UZ unter einer bestimmten Adresse ein U-Bit im Unterbrechungsregister UR findet, so wird diese Adresse in das Adreßzwischenregister AZR geschrieben. Das U-Bit im Unterbrechungsregister UR wird gelöscht und als P-Bit in die entsprechende Ebene des Programmregisters PR geschrieben. Die zum Adreßzwischenregister AZR gehörende Kippstufe U2 wird auf 1 gesetzt.

Wenn der Umlaufzähler UZ unter einer bestimmten Adresse ein P-Bit im Programmregister PR findet, so wird diese Adresse in das Adreßzwischenregister AZR geschrieben, und die zugehörige Kippstufe P2 auf 1 gesetzt.

Das Statusregister S zeigt verschiedene Zustände des Suchvorganges an. Diese werden später im Zusammenhang mit verschiedenen Ergebnissen des Suchvorganges beschrieben.

Das Adreßzwischenregister AZR beinhaltet immer die Adresse eines Instruktionszeigers IZ, d. h. die Programmebene des Prozessors, die der Prozessor als nächste abarbeitet. Die dem Adreßzwischenregister AZR zugeordneten Kippstufen U2 und P2 dienen zur Anzeige, ob die im Adreßzwischenregister AZR stehende Adresse einer Unterbrechungsanforderung (Kippstufe U2) oder einem Programmschritt (Kippstufe P2) zugeordnet ist, und ob die Adresse gültig ist. Sind die beiden Kippstufen U2 und P2 beide auf Null gesetzt, so wird dadurch angezeigt, daß die im Adreßzwischenregister AZR stehende Adresse ungültig ist. Das Schreiben der im Umlaufzähler UZ enthaltenen Adresse in das Adreßzwischenregister AZR und das Setzen der beiden Kippstufen U2 und P2 wird von dem im Programmspeicher PS stehenden Steuerungsprogramm gesteuert.

Das Adreßregister AR enthält als Adresse immer die aktuelle Instruktionszeigeradresse des laufenden Programmes. Zwei dem Adreßregister AR zugeordnete Kippstufen U3 und P3 dienen zur Anzeige, ob die im Adreßregister AR stehende Adresse einer Unterbrechungsanforderung (Kippstufe U3) oder einem Programmschritt (Kippstufe P3) zugeordnet ist.

Am Ende einer jeden vom Prozessor ausgeführten Instruktion wird durch das Steuerwerk ST des Prozessors P durch einen Quittungsimpuls die Übernahme der aktuellen Instruktionszeigeradresse zusammen mit dem U-Bit und dem P-Bit aus dem Adreßzwischenregister AZR mit den beiden Kippstufen U2 und P2 in das Adreßregister AR mit den beiden Kippstufen U3 und P3 freigegeben.

Das Adreßzwischenregister AZR und die beiden Kippstufen U2 und P2 sind als Latch ausgeführt, d. h. ab der Rückflanke des Systemtaktes ist das Adreßzwischenregister AZR und die beiden Kippstufen U2 und P2 bis zur Vorderflanke des nächstfolgenden Systemtaktes transparent. Das bedeutet, daß ab Beginn des Taktzyklus die aktuelle Instruktionszeigeradresse zusammen mit dem U-Bit bzw. dem P-Bit zur Übernahme in das Adreßregister AR und in die beiden Kippstufen U3 und P3 bereit sind.

Durch diese Maßnahmen ist sichergestellt, daß für die nächste, aktuelle Instruktion, die von einem der Instruktionsanzeiger IZ adressiert wird, das U-Bit bzw. das P-Bit aus einer gültigen Programmebene der beiden Register UR und PR mit der entsprechenden Adresse, die im Umlaufzähler UZ steht, für einen der Instruktionszähler IZ gelesen wird.

Durch die im Adreßregister AR stehende Instruktionszeigeradresse wird einer der acht, parallel arbeitenden Instruktionszeiger IZ adressiert. Jeder der Instruktionszeiger IZ enthält immer die Instruktionsadresse, durch die, sobald dieser Instruktionszeiger adressiert wird, die nächste Instruktion im externen Programmspeicher EPS adressiert wird. Diese Instruktion wird nur dann zur Abarbeitung in den Prozessor P eingelesen, wenn eine der beiden zum Adreßregister AR gehörenden Kippstufen U3 oder P3 auf 1 gesetzt ist.

Im folgenden wird die Wirkungsweise der Schaltungsanordnung an Hand verschiedener Kombinationen von Programmabläufen und Unterbrechungsanforderungen erläutert.

Um eine Unterbrechung auszuführen, werden in das laufende aktuelle Programm zusätzliche Instruktionen eingefügt. Diese Funktion wird durch Umschaltung der adressierbaren Instruktionszeiger IZ ausgeführt. Diese Instruktionszeiger IZ adressieren schrittweise im externen Programmspeicher EPS Instruktionen, die anschließend zur Abarbeitung des Programmes in den Prozessor P eingelesen werden.

Zu Beginn eines jeden Programmablaufes werden durch einen Resetbefehl alle in dem Unterbrechungsregister UR und dem Programmregister PR stehenden Bits gelöscht, und es werden auch keine Bits eingeschrieben. Gleichzeitig werden die beiden Kippstufen U1 und P1 des Statusregisters S und die Instruktionszeiger IZ auf Null gesetzt.

Vom Steuerungsprogramm des Programmspeichers PS wird in die Ebene mit der höchsten Priorität (Prioritätsebene 0), des Programmregisters PR ein P-Bit geschrieben, damit das Programm gestartet werden kann. Nach Wegnahme des Resetbefehls zeigt das Statusregister S durch die beiden auf Null gesetzten Kippstufen U1 und P1 den Zustand »U-Bit und P-Bit suchen« an.

Wird vom Umlaufzähler UZ im Unterbrechungsregister UR oder im Programmregister PR ein U- oder ein P-Bit gefunden, so wird die entsprechende Kippstufe U1 oder P1 des Statusregisters S auf 1 gesetzt und somit der weitere Suchvorgang nach dem entsprechenden Bit gesperrt.

Beim Überlauf des Umlaufzählers UZ von der Adresse 7 nach der Adresse 0 wird die Kippstufe P1 des Statusregisters S, wenn nicht vorher ein U-Bit im Unterbrechungsregister UR gefunden wurde, auf Null gesetzt und der Suchvorgang nach U- und P-Bits beginnt wieder ab der Adresse Null. Wird vorher ein U-Bit im Unterbrechungsregister UR gefunden, so beginnt der Suchvorgang ab der Adresse Null erst nach dem Quittungsimpuls aus dem Steuerwerk ST, d. h. der Quittungsimpuls muß vor dem Überlauf des Umlaufzählers UZ erfolgt sein.

Die aktuelle Programmebene des Prozessors ist im Programmregister PR dadurch gekennzeichnet, daß mit dem ersten gefundenen P-Bit ab der Stelle Null, die im Umlaufzähler UZ stehende Adresse als aktuelle Instruktionszeigeradresse in das Adreßzwischenregister AZR geschrieben wird. Die zum Adreßzwischenregister AZR gehörende Kippstufe P2 und die Kippstufe P1 des Statusregisters S werden gleichzeitig dabei auf 1 gesetzt. Das Statusregister zeigt jetzt den Zustand »P-Bit gefunden, U-Bit suchen« an. Die auf 1 gesetzte Kippstufe P2 zeigt an, daß die im Adreßzwischenregister AZR stehende Adresse gültig ist, und daß sie einem Programmschritt entspricht.

Wenn vom Umlaufzähler UZ bei einem weiteren Vorwärtszählen bis zur Adresse 7 kein U-Bit im Unterbrechungsregister gefunden wird, so wird beim Überlauf von der Adresse 7 zur Adresse 0 die Kippstufe P1 auf Null zurückgesetzt. Jetzt ist wieder die Suche nach U- und P-Bits freigegeben.

Wenn vom Umlaufzähler UZ durch weiteres Vorwärtszählen ab der Adresse, unter der im Programmregister PR bereits ein P-Bit gefunden wurde, bis zur Adresse 7 ein U-Bit im Unterbrechungsregister UR gefunden wird, so wird die im Umlaufzähler UZ stehende Adresse als aktuelle Instruktionszeigeradresse in das Adreßzwischenregister AZR geschrieben. Das im Unterbrechungsregister UR gefundene U-Bit wird gelöscht, und durch Rückschreiben in die gleiche Stelle des Programmregisters PR durch ein P-Bit ersetzt. Die zum Adreßzwischenregister AZR gehörende Kippstufe U2 und die Kippstufe U1 des Statusregisters werden gleichzeitig dabei auf 1 gesetzt. (Die Kippstufe P1 ist schon auf 1 gesetzt.) Das Statusregister S zeigt jetzt den Zustand »U-Bit gefunden, stop, warten auf Quittung« an. Die auf 1 gesetzte Kippstufe U2 zeigt an, daß die im Adreßzwischenregister AZR stehende Adresse gültig ist, und daß sie einer Unterbrechungsanforderung entspricht.

Der gleiche Vorgang läuft ab, wenn durch das Vorwärtszählen des Umlaufzählers UZ im Unterbrechungsregister UR ein U-Bit gefunden wird, ohne daß vorher im Programmregister PR ein P-Bit gefunden wurde. Das Statusregister S zeigt auch dann den Zustand »U-Bit gefunden, stop, warten auf Quittung« an, wenn nur die Kippstufe U1 auf 1 gesetzt ist.

Die beiden Kippstufen U1 und P1 des Statusregisters S bleiben solange in dem Zustand »U-Bit gefunden, stop, warten auf Quittung« (U1 = 1 oder U1 und P1 = 1), bis der Quittungsimpuls vom Steuerwerk ST des Prozessors P ausgegeben wird. Der Zustand »U-Bit gefunden, stop, warten auf Quittung« wird auch bei einem Überlauf des Umlaufzählers UZ von der Adresse 7 zur Adresse 0 vor dem Quittungsimpuls nicht verlassen, d. h. die auf 1 gesetzte Kippstufe P1 wird vorher nicht auf Null gesetzt.

Wenn ein U-Bit im Unterbrechungsregister UR und ein P-Bit im Programmregister PR gleichzeitig, d. h. wenn beide Bits vom Umlaufzähler UZ unter der gleichen Adresse gefunden werden, dann hat das P-Bit die höhere Priorität. Das hat zur Folge, daß zuerst die im Umlaufzähler UZ stehende Adresse mit dem P-Bit in das Adreßzwischenregister geschrieben und die Kippstufe P2 gesetzt wird. Dann wird das U-Bit gelöscht und durch ein P-Bit in der gleichen Ebene des Programmregisters PR ersetzt. Gleichzeitig wird die im Umlaufzähler UZ stehende Adresse mit dem U-Bit in das Adreßzwischenregister AZR und in die Kippstufe U2 geschrieben.

Der Quittungsimpuls, der vom Steuerwerk ST des Prozessors ausgegeben wird, und der das Ende der Abarbeitung einer Instruktion im Prozessor meldet, bewirkt das Schreiben der im Adreßzwischenregister AZR stehenden Instruktionsadresse in das Adreßregister AR. Gleichzeitig werden die beiden zum Adreßregister AR gehörenden Kippstufen U3 und P3 auf die Werte der zum Adreßzwischenregister AZR gehörenden Kippstufen U2 und P2 gesetzt. Die Kippstufe U1 im Statusregister S wird von dem Quittungsimpuls auf Null zurückgesetzt, wodurch der Suchvorgang nach U-Bits ab der gerade im Umlaufzähler UZ stehenden Adresse wieder freigegeben wird.

Beim Überlauf des Umlaufzählers UZ von der Adresse 7 zur Adresse 0 wird auch die Kippstufe P1 auf Null zurückgesetzt. Jetzt ist die Suche nach U- und P-Bits freigegeben.

Mit dem Beginn des Taktzyklus beginnt die Abarbeitung der in den Prozessor P eingelesenen Instruktionen, und gleichzeitig das Einlesen der nächsten Instruktion in den Prozessor P aus dem externen Programmspeicher EPS. Diese Instruktion, die als nächste eingelesen wird, wird immer durch die im aktuellen Instruktionszeiger IZ stehende Instruktionsadresse adressiert. Der aktuelle Instruktionszeiger wird durch die im Adreßregister AR stehende Instruktionszeigeradresse bestimmt. Nach dem Einlesen der nächsten Instruktion wird die Instruktionszeigeradresse im aktuellen Instruktionszeiger IZ um 1 erhöht. Sind in dem Unterbrechungsregister UR und dem Programmregister PR keine U- und P-Bits mehr gesetzt, so bleibt die zuletzt in das Adreßzwischenregister AZR geschriebene Instruktionszeigeradresse dort stehen. Die zum Adreßzwischenregister AZR gehörenden Kippstufen U2 und P2 werden durch das im Programmspeicher PS stehende Steuerungsprogramm auf Null gesetzt. Dadurch wird angezeigt, daß die im Adreßzwischenregister AZR stehende Adresse nicht gültig ist.

Werden im Programmregister PR P-Bits immer in der gleichen Ebene, d. h. mit der gleichen im Umlaufzähler UZ stehenden Adresse gefunden, so wird die im Adreßzwischenregister AZR stehende Adresse immer mit der gleichen Instruktionszeigeradresse überschrieben. Dies geschieht solange, bis im Programmregister PR ein P-Bit in einer Ebene mit höherer Priorität gefunden wird.

Durch einen Instruktionsanzeiger IZ, der durch ein U-Bit im Unterbrechungsregister UR adressiert wurde, wird die Unterbrechung, d. h. der Datentransfer ausgeführt. Durch das P-Bit, das in die Ebene des Programmregisters PR eingeschrieben wurde, in der das U-Bit im Unterbrechungsregister UR gefunden wurde, wird ein Programm zur Bearbeitung der Unterbrechung im Prozessor P gestartet.

Die P-Bits im Programmregister PR werden in der Reihenfolge ihrer Priorität abgearbeitet. Sind mehrere U-Bits im Unterbrechungsregister UR gesetzt, so werden diese unabhängig von ihrer Reihenfolge abgearbeitet.

Die U- bzw. P-Bits werden unabhängig vom Zustand des Statusregisters S im Unterbrechungsregister UR bzw. im Programmregister PR gesetzt.

Die Anzahl der Eingänge des Unterbrechungsmultiplexers UMX und dadurch auch die Anzahl der Ebenen der Unterbrechungsregister UR und des Programmregisters PR sowie der Adreßumfang des Umlaufzählers UZ sind hier beispielsweise mit 8 angegeben. Eine größere oder kleinere Anzahl ist natürlich ebenfalls durch die erfindungsgemäße Schaltungsanordnung realisierbar.

Anstelle dieses sequentiell arbeitenden Ausführungsbeispieles ist auch eine parallel arbeitende Schaltungsanordnung möglich. In dieser würden an den Eingängen anliegende Unterbrechungsanforderungen gleichzeitig über eine aus Gattern aufgebaute Logikschaltung die Instruktionszeiger IZ adressieren.

## Patentansprüche

1. Schaltungsanordnung zur schnellen Ausführung des zu einer Unterbrechungsroutine gehörenden Datentransfers nach Erkennung einer Unterbrechungsanforderung in einem Prozessor mit über einen Bus und Steuerleitungen verbundenem Steuerwerk, externem Programmspeicher, und mehreren, parallelarbeitenden und adressierbaren Instruktionszeigern, wobei die Instruktionszeiger einerseits durch das Programm und andererseits durch Erkennen von Unterbrechungsanforderungen adressiert werden, dadurch gekennzeichnet, daß ein Unterbrechungsmultiplexer (UMX) vorgesehen ist, an dessen Eingängen Leitungen für Unterbrechungsanforderungen angeschaltet sind,

daß ein Umlaufzähler (UZ) vorgesehen ist, der zyklisch die Adressen der Eingänge bildet und den Unterbrechungsmultiplexer (UMX) nach gesetzten Unterbrechungsanforderungen absucht, daß ein Unterbrechungsregister (UR) vorgesehen ist, in das unter einer bestimmten Adresse gefundene Unterbrechungsanforderungen als Bits — U-Bits — in eine Stelle des Unterbrechungsregisters (UR) geschrieben werden, die durch diese Adresse bestimmt ist,

daß ein Programmregister (PR) vorgesehen ist, in dem Bits — P-Bits — durch Instruktionen aus einen, im externen Programmspeicher (EPS) stehenden Programm gesetzt und gelöscht werden, und in das auch U-Bits aus dem Unterbrechungsregister UR als P-Bits übernommen werden, daß der Umlaufzähler (UZ) das Unterbrechungsregister (UR) und/oder das Programmregister (PR) in Abhängigkeit von dem Zustand, den ein Statusregister (S) anzeigt, nach gesetzten U- und/oder P-Bits absucht,

und daß die Adresse im Umlaufzähler (UZ), unter der ein U- bzw. P-Bit gefunden wurde, in ein Adreßzwischenregister (AZR) geschrieben wird, daß am Ende einer jeden Abarbeitung einer Instruktion durch den Prozessor (P) die im Adreßzwischenregister (AZR) stehende Adresse in ein Adreßregister (AR) übernommen wird, daß durch die im Adreßregister (AR) stehende Adresse einer der Instruktionszeiger (IZ) adressiert wird,

daß dem Adreßzwischenregister (AZR) und dem Adreßregister (AR) zugeordnete Anzeigestufen vorgesehen sind, die zur Anzeige der Gültigkeit bzw. der Nichtgültigkeit der in diesen Registern stehenden Adresse dienen, und

daß ein Programmspeicher (PS) vorgesehen ist, dessen Programm die Schaltungsanordnung steuert.

2. Schaltungsanordnung nach Anspruch 1, dadurch gekennzeichnet, daß das Statusregister (S) aus zwei Kippstufen (U1) und (P1) besteht, wobei eine gesetzte Kippstufe (U1 und/oder P1) die Suche nach dem entsprechenden U- und/oder P-Bit sperrt.

3. Schaltungsanordnung nach Anspruch 1 oder 2, dadurch gekennzeichnet, daß die Anzeigestufen des Adreßzwischenregisters (AZR) zwei Kippstufen (U2 und P2) und die des Adreßregisters (AR) zwei Kippstufen (U3 und P3) aufweisen.

4. Schaltungsanordnung nach einem der Ansprüche 1 bis 3, dadurch gekennzeichnet, daß der Programmspeicher (PS) eine ROM-Struktur aufweist.

## Claims

1. A circuit arrangement for rapidly executing the data transfer which forms part of an interrupt routine, following the recognition of an interrupt request in a processor, by means of a control unit which is connected via a bus and control lines, with an external programme store, and by means of a plurality of parallel operating and adressable instruction indicators, where the instruction indicators are addressed on the one hand by the programme and on the other hand by the recognition of interrupt requests,

characterised in that an interrupt multiplexer (UMX) is provided whose inputs are connected to lines for interrupt requests, that a cycle counter (UZ) is provided which cyclically forms the adresses of the inputs and searches the interrupt multiplexer (UMX) for set interrupt requests, that an interrupt register (UR) is provided into which interrupt requests, found under a specific address, are input as bits — U-bits — into a position of the interrupt register (UR) which is specified by this address,

that a programme register (PR) is provided in which bits — P-Bits — are set and erased by instructions from a programme contained in the external programme store (EPS) and into which U-bits are also transferred from the interrupt register (UR) as P-bits,

that the cycle counter (UZ) searches the interrupt register (UR) and/or the programme register (PR) in dependence upon the state displayed by a status register (S) for set U- and/or P-bits, and that the address in the cycle counter (UZ) under which a U-bit or P-bit has been found is transferred into an address intermediate register (AZR), that at the end of each processing of an instruction by the processor (P), the address contained in the address intermediate register (AZR) is transferred into an address register (AR), that one of the instruction indicators (IZ) is addressed by the address contained in the address register (AR),

that display stages are provided which are assigned to the adress intermediate register (AZR) and to the address register (AR) and which serve to display the validity or non-validity of the address contained in these registers, and that a programme store (PS) is provided whose programme controls the circuit arrangement.

2. A circuit arrangement as claimed in claim 1, characterised in that the status register (S) comprises two flip-flops (U1) and (P1), where a set flip-flop (U1 and/or P1) blocks the search for the corresponding U- and/or P-bit.

3. A circuit arrangement as claimed in claim 1 or 2, characterised in that the display stages of the address intermediate register (AZR) include two flip-flops (U2 and P2) and those of the address register (AR) include two flip-flops (U3 and P3).

4. A circuit arrangement as claimed in one of the claims 1 to 3, characterised in that the programme store (PS) has a ROM-structure.

## Revendications

1. Montage pour l'exécution rapide d'un transfert de données appartenant à une routine d'interruption, après identification d'une demande d'interruption dans un processeur, comportant une unité de commande reliée par l'intermédiaire d'un bus et de conducteurs de commande, une mémoire extérieure de programmes et plusieurs indicateurs d'instructions adressables et opérant en parallèle, les indicateurs d'instruction étant adressés d'une part par le programme et d'autre part par l'indentification de demandes d'interruptions, caractérisé par le fait qu'il est prévu un multiplexeur d'interruptions (UMX) aux entrées duquel sont reliés des conducteurs pour des demandes d'interruptions, qu'il est prévu un compteur cyclique (UZ) qui forme cycliquement les adresses des entrées et qui interroppe le multiplexeur d'interruptions (UMX) pour identifier des demandes d'interruptions formulées, qu'il est prévu un registre d'interruptions (UR) dans lequel les demandes d'interruptions trouvées sous une adresse déterminée, sont inscrites, comme bits —bits-U— dans un emplacement du registre d'interruptions, qui est déterminé par cette adresse, qu'il est prévu un registre de programmes (PR) dans lequel des bits —bits-P— sont mémorisés et effacés par des instructions provenant d'un programme contenu dans la mémoire extérieure de programmes, et dans lequel sont également pris en charge, en tant que bits-P, des bits-U provenant du registre d'interruptions, que le registre cyclique (UZ) interroge le registre d'interruptions (UR) et/ou le registre de programmes (PR), et en fonction de l'état qu'affiche un registre d'états pour rechercher des bits U et/ou des bits P mémorisés, et que l'adresse dans le compteur cyclique (UZ) sous laquelle a été trouvé un bit U ou un bit P, est inscrite dans un registre intermédiaire d'adresses (AZR), qu'à la fin de chaque traitement d'une instruction par le processeur (P), l'adresse contenue dans le registre intermédiaire d'adresses (AZR) est prise en charge dans un registre d'adresses, que par l'adresse contenue dans le registre d'adresses (AR), l'un des indicateurs d'adresses (IZ) est adressé, qu'au registre intermédiaire d'adresses (AZR) et au registre d'adresses (AR) sont associés des étages indicateurs qui servent à indiquer la validité ou l'invalidité des adresses contenues dans ces registres, et qu'il est prévu une mémoire de programme (PS) dont le program contrôle l'unité de commande.

2. Montage selon la revendication 1, caractérisé par le fait que le registre d'états (S) est constitué par deux étages à bascule (U1) et (P1), un étage à bascule (U1 et/ou P1) qui a été positionné, bloquant la recherche du bit U et/ou P correspondant.

3. Montage selon la revendication 1 ou 2, caractérisé par le fait que les étages indicateurs du registre intermédiaire d'adresses (AZR) comportent deux étages à bascule (U2 et P2) et le registre d'adresses (AR) comporte deux étages à bascule (U3 et P3).

4. Montage selon l'une des revendications 1 à 3, caractérisé par le fait que la mémoire de programme (PS) présente une structure ROM.